# EUROPÄISCHE PATENTSCHRIFT

(11) **EP 2 488 693 B1**
(45) Veröffentlichungstag und Bekanntmachung des Hinweises auf die Patenterteilung: **25.09.2013**
(21) Anmeldenummer: 10736653.6
(22) Anmeldetag: 14.07.2010
(51) Int. Cl.: D21B 1/34, D21D 5/04, D21D 5/16

(54) **STOFFLÖSER**
PULPER
PULPEUR

(30) Priorität: 13.10.2009 DE 102009045613
(43) Veröffentlichungstag der Anmeldung: 22.08.2012
(60) Teilanmeldung: 12195642.9
(73) Patentinhaber: Voith Patent GmbH, 89522 Heidenheim (DE)
(72) Erfinder: FEY, Jürgen, 88214 Ravensburg (DE); GOTTSCHALK, Gerd, 88212 Ravensburg (DE); BRETTSCHNEIDER, Werner, 88287 Grünkraut (DE); OTT, Elmar, 88213 Ravensburg (DE)
(86) Internationale Anmeldenummer: PCT/EP2010/060113
(87) Internationale Veröffentlichungsnummer: WO 2011/045094

(56) Entgegenhaltungen:
- EP-A1- 1 679 403
- EP-A1- 1 693 505
- WO-A1-98/49389
- WO-A1-03/033152
- DE-A1- 10 116 367

## Beschreibung

Die Erfindung betrifft einen Stofflöser zur Zerkleinerung und Suspendierung von Faserstoff bestehend aus einem Behälter und mindestens einem im Behälter angeordneten Rotor zum Umwälzen einer im Behälter befindlichen Faserstoffsuspension sowie mindestens einem starren Sieb, dessen mit runden Sieböffnungen versehene Siebfläche vom Rotor zumindest größtenteils überstrichen wird.

Stofflöser dieser Art werden hauptsächlich angewendet, um trockenes Zellstoffmaterial oder Altpapier der unterschiedlichsten Zusammensetzung in Suspension zu bringen. Sie bestehen im Wesentlichen aus einem Behälter für die Suspension und mindestens einem Rotor. Das eingetragene Material wird lose in großen Stücken, Bahnen oder gepressten Ballen mit Wasser intensiv vermischt, wobei durch den Rotor ein hydraulischer Stoffumtrieb erzeugt wird. Verständlicherweise werden solche Vorrichtungen optimiert, wobei im Wesentlichen eine schnelle und kraftwirtschaftliche Auflösung angestrebt wird. In vielen Fällen wird der Rotor in unmittelbarer Nähe eines ebenen Siebes angeordnet, das er frei von Verstopfungen hält. Durch die Öffnungen des Siebes wird der aufgelöste Stoff von groben Verunreinigungen sortiert und als Suspension abgezogen.

Als Standardtyp für einen Stofflöser hat sich ein senkrecht stehender zylindrischer Behälter mit einem Rotor im Bodenbereich durchgesetzt wie beispielsweise in der EP 1693505 A1 offenbart. In diesen Behälter wird Wasser und der aufzulösende Stoff von oben zugegeben und mit Hilfe des Rotors eine Trombenströmung in der Suspension erzeugt, bei der also im inneren Bereich der Stoff vom Rotor nach unten gezogen und im Bodenbereich radial nach außen gedrückt wird, wodurch sich eine Umtriebsströmung ergibt.

Eine weitere typische Bauart ist der oben offene Stofflöser-Behälter mit seitlich eingesetztem Rotor, wie in der WO 98/49389 beschrieben. Dort wird die Suspension etwa waagerecht zum Rotor gefördert und an der den Rotor tragenden Seitenwand des Behälters umgelenkt.

Diese hydraulisch oft weniger günstige Form hat den Vorteil, unter der Papiermaschine als Ausschussauflöser Platz zu finden.

Das erwähnte Sieb dient zunächst dazu, eine Trennung vorzunehmen, bei der die bereits genügend aufgelösten Anteile des Papierstoffes durch die Öffnungen des Siebes hindurch abgezogen und noch nicht genügend Aufgelöstes zurückgehalten wird. Dadurch wird in an sich bekannter Weise der Auflöseprozess ökonomische, insbesondere kann der Stofflöser, wenn gewünscht, kontinuierlich betrieben werden. Störstoffe, also im Wesentlichen papierfremde Bestandteile, werden zurückgehalten bzw. aussortiert.

In vielen Fällen trägt dieses Sieb aber auch dazu bei, den Auflösevorgang zu verstärken. Die dem Siebblech zugewandte Seite des Rotors tritt nämlich mit den Einlaufkanten der Sieböffnungen in Wechselwirkung. Zwar wird immer ein gewisser Abstand zwischen Rotor und Siebblech eingehalten, doch genügen die dabei auftretenden Scherkräfte, die Papierstoffteilchen weiter zu zerlegen. Größere Stücke können auch den Abstand zwischen Sieb und Rotor überbrücken, so dass eine direkte Schnittwirkung eintritt. In welcher Form und in welcher Intensität diese Vorgänge stattfinden, hängt von den Anforderungen und der Auslegung des Stofflösers ab.

Es ist auch bekannt, die soeben beschriebene Auflösewirkung dadurch weiter zu verstärken, dass die Siebbleche an der Einlaufseite mit Leisten versehen werden, wie es z.B. aus der DE 101 16 367 bekannt ist.

Aus der WO 03/033152 A1 ist eine Siebplatte bekannt, deren Öffnungen durch Stanzen, Laser- oder Wasserstrahl eingebracht worden sind. Diese Öffnungen sind nicht kreisrund, sondern mit Ecken versehen und vorzugsweise mosaikartig auf der Siebplatte verteilt. Dadurch soll die Auflösewirkung verstärkt werden. Allerdings ergeben sich Probleme bei der Herstellung und hinsichtlich Verstopfungsgefahr.

Die bekannten Siebe für solche Stofflöser werden zumeist mit kreisrunden Bohrungen oder, wie in der EP1679403 beschrieben, mit länglichen Sieböffnungen versehen, wobei ein Kompromiss gefunden werden muss zwischen der Forderung nach optimaler Klassierung, also möglichst kleinen Sortieröffnungen, und der Forderung nach möglichst hohem Durchsatz, also möglichst großer offener Fläche.

Die Charakteristik eines solchen Siebes ergibt sich im Wesentlichen aus Größe, Form und Anzahl der sich darin befindlichen Sieböffnungen.

Neben einem großen Durchsatz wird dabei auch eine hohe Festigkeit gegen den hydraulischen Druck angestrebt.
Um dem gerecht zu werden, wird in der DE19547585 ein Sieb mit einer Stütz- und einer Sortierschicht vorgeschlagen.

Problematisch bleiben jedoch die Sieböffnungen, insbesondere hinsichtlich Herstellung, Durchsatz und Verstopfungsgefahr.

Die Aufgabe der Erfindung ist es daher, bei diesen Sieben einen hohen Durchsatz bei möglichst geringem Energiebedarf und möglichst großer wirksamer Schnittkantenlänge zu gewährleisten.

Erfindungsgemäß wurde die Aufgabe dadurch gelöst, dass der Querschnitt der Sieböffnungen ausschließlich von Kreisabschnitten begrenzt wird und das Verhältnis zwischen dem größten und dem kleinsten Radius der Kreisabschnitte zwischen 3 und 20 liegt. Vorteilhaft ist dabei auch, wenn die Radien einen tangentialen Übergang aufweisen und sich hinsichtlich Krümmungsradius und/oder Krümmungsrichtung unterscheiden.
Die runde Ausführung der Sieböffnungen wirkt sich positiv auf eine Herstellung mittels Laserschneiden aus, da keine Geschwindigkeitsänderung wie ansonsten beim Schneiden von Ecken erforderlich ist.
Außerdem verbessert sich durch die ausschließlich runden Kanten der Sieböffnungen die Wirkung des Rotors beim Überstreichen derselben erheblich.
Hinzu kommt neben einer verminderten Verstopfungsgefahr auch die Möglichkeit einer Optimierung hinsichtlich offener Fläche und Festigkeit des Siebes.

Dabei sollten die Kreisabschnitte unterschiedlich lang sein und/oder unterschiedliche Radien aufweisen, wobei sich vorzugsweise lange und kurze Kreisabschnitte bzw. große und kleine Radien abwechseln und insbesondere lange, vorzugsweise gleich große Kreisabschnitte große Radien und kurze, vorzugsweise gleich große Kreisabschnitte kleine Radien haben.

Untersuchungen hierzu haben ergeben, dass ein optimales Verhältnis zwischen dem größten und dem kleinsten Radius der Kreisabschnitte zwischen 5 und 15 zu finden ist.

In den meisten Fällen ist es dabei von Vorteil, wenn der kleinste Radius der Kreisabschnitte zwischen 1,5 und 3 mm und/oder der größte Radius der Kreisabschnitte zwischen 10 und 30 mm liegt.

Des weiteren sollte die Anzahl der Kreisabschnitte des Querschnitts der Sieböffnungen mindestens 4 und höchstens 10 betragen.

Entsprechend den Anforderungen an den Stofflöser bzw. dessen Konstruktion sowie der Qualität und Zusammensetzung der Faserstoffsuspension kann es von Vorteil sein, wenn alle Sieböffnungen der Siebfläche gleich ausgebildet sind.

Zur Beeinflussung der Stabilität des Siebes und/oder deren Charakteristik kann es aber demgegenüber vorteilhaft sein, wenn die Sieböffnungen der Siebfläche unterschiedliche Querschnittsformen aufweisen oder die Sieböffnungen der Siebfläche die gleiche Querschnittsform besitzen, aber unterschiedlich groß ausgebildet sind.

Aus gleichem Grund kann es von Vorteil sein, dass mehrere, vorzugsweise alle Kreisabschnitte einer Sieböffnung bezogen auf die Mitte des Querschnitts der Sieböffnung konvex gekrümmt verlaufen oder aber wenigstens ein Kreisabschnitt konkav gekrümmt ist.
Vorteilhafte Gestaltungsformen ergeben sich im letztgenannten Fall, wenn zwei sich vorzugsweise gegenüberliegende Kreisabschnitte einer Sieböffnung bezogen auf die Mitte des Querschnitts der Sieböffnung konkav gekrümmt verlaufen.

Zur Steigerung des Durchsatzes bei weitestgehend gleicher Siebfeinheit ist es von Vorteil, wenn die Sieböffnungen einen länglichen Querschnitt aufweisen.

Zur optimalen Ausnutzung der Siebfläche können die Sieböffnungen einer Siebfläche, insbesondere auch in Abhängigkeit von ihrer Querschnittsform, gleich oder aber unterschiedlich ausgerichtet sein.

Bei vielen Querschnittsformen ist es bei unterschiedlicher Ausrichtung vorteilhaft, wenn benachbarte Sieböffnungen um 90° oder 180° versetzt zueinander angeordnet sind.

Außerdem kann einer Verstopfung entgegengewirkt werden, wenn sich der Querschnitt einer Sieböffnung in Durchströmungsrichtung der Faserstoffsuspension vorzugsweise stetig vergrößert.
Als Stofflöser werden hier auch Nachauflöse-Maschinen, beispielsweise Fiberizer verstanden.

Nachfolgend soll die Erfindung an mehreren Ausführungsbeispielen näher erläutert werden. In der beigefügten Zeichnung zeigt:
Figur 1: einen Querschnitt durch einen stehenden Stofflöser;
Figur 2: einen Querschnitt durch einen liegenden Stofflöser;
Figur 3: eine Draufsicht auf ein Sieb 3 mit Rotor 4;
Figur 4: einen Teilquerschnitt durch ein Sieb 3 und
Figuren 5 bis 11: verschiedene Sieböffnungen 6.

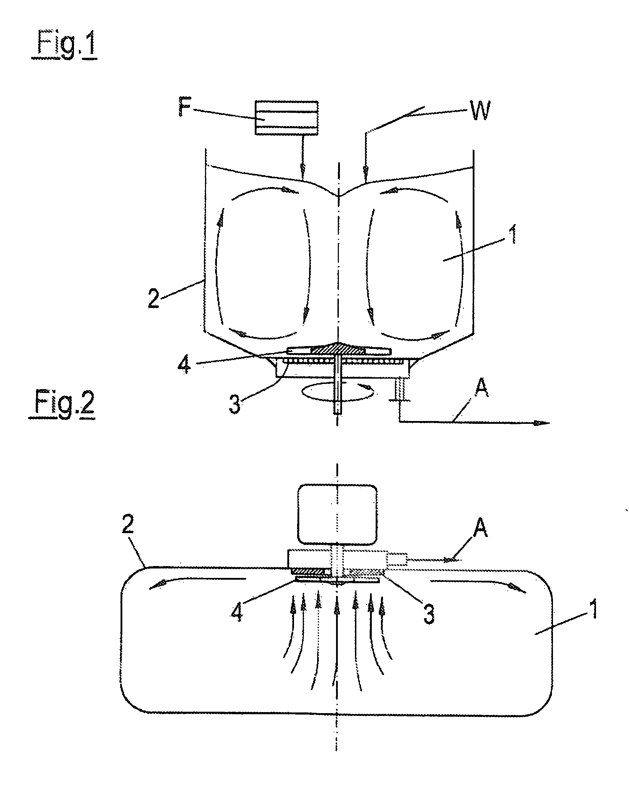

Die häufigste Form eines Stöfflösers, bei dem die Erfindung angewendet werden kann, ist der stehende, zylindrische und oben offene Stofflöser gemäß Figur 1, bei dem sich Sieb 3 und Rotor 4 im Bodenbereich befinden. Beim Betrieb werden Papierstoff F und Wasser W in den Behälter 2 eingetragen. Die fertige pumpfähige Faserstoffsuspension 1 wird durch das Sieb 3 hindurch als Gutstoff A abgezogen. Solche Stofflöser sind seit langem bekannt.
Das gleiche gilt auch für Stofflöser gemäß Figur 2. Wie bereits erwähnt, kann ein solcher liegender Behälter 2 besonders vorteilhaft unter einer Papiermaschine zur Auflösung von Produktionsausschuss eingesetzt werden. Eine weitere Anwendung ist der Sekundärstofflöser, z.B. gemäß DE-A-23 45 735, dessen Siebblech mit entsprechend der Erfindung veränderten Sieböffnungen versehen ist.

Gemeinsam ist allen Ausführungen, dass die Siebfläche des starren und kreisrunden Siebes 3 größtenteils vom Rotor 4 bzw. dessen Rotorflügeln überstrichen wird, wobei der Rotor 4 in Durchströmrichtung der Faserstoffsuspension 1 vor dem Sieb 3 rotiert.

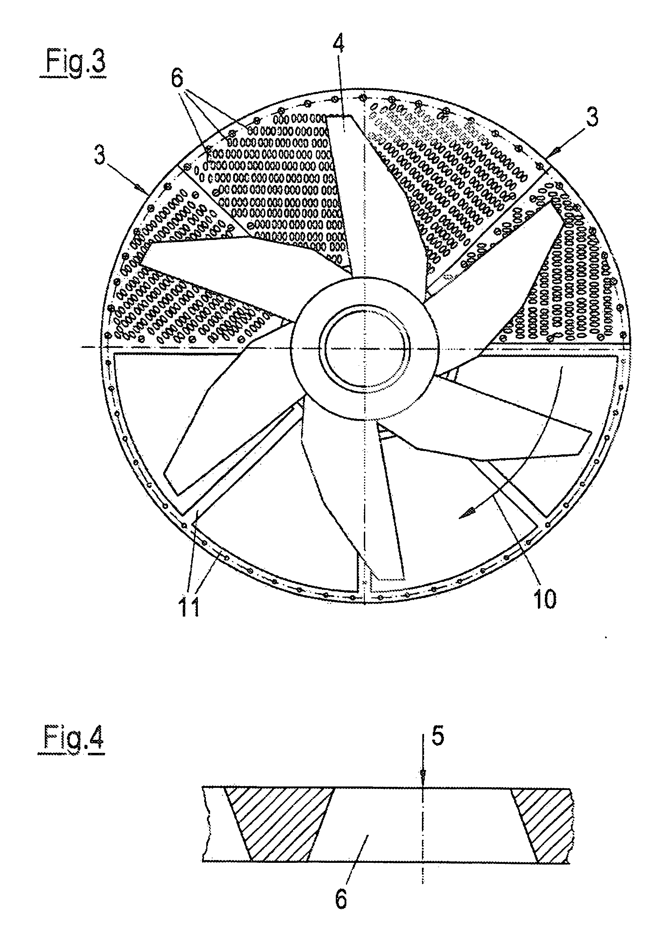

Hierzu zeigt Figur 3 einen Rotor 4, der konzentrisch mit einem ringförmigen ebenen Sieb 3 im ansonsten nicht dargestellten Stofflöser angeordnet ist. Der Rotor 4 ist mit Flügeln versehen und so dimensioniert, dass er bei Rotation 10 die Siebfläche des Siebes 3 vollständig oder zumindest größtenteils überstreicht.
Erfindungsgemäß wird der Querschnitt der Sieböffnungen 6 dieses Siebes 3 ausschließlich von Kreisabschnitten begrenzt, wobei zumindest zwei Kreisabschnitte unterschiedliche Radien 7,8,9 aufweisen.

Bei größeren Sieben 3 ist es üblich, diese zunächst als Ringsegmente herzustellen, die dann im Stofflöser zu einem gesamten Sieb 3 zusammengesetzt werden. Bei dem hier gezeigten Beispiel besteht das ganze Sieb 3 aus insgesamt acht Segmenten, von denen vier gezeichnet sind.
Die Siebsegmente können an einem darunter liegenden Traggestell 11 befestigt werden.
Wie in Figur 4 dargestellt, sollte sich der Querschnitt der Sieböffnung 6 in Durchströmrichtung 5 kontinuierlich vergrößern, was einem Verstopfen der Sieböffnungen 6 entgegenwirkt.
Dabei bereitet die Herstellung der Sieböffnungen 6 mit der erfinderischen Querschnittsform wie auch eine Querschnittsveränderung beim Laserschneiden keinerlei Probleme. Im Gegenteil so kann das Schneidgerät bei fehlenden Ecken gleichmäßiger entlang der zu schneidenden Kontur bewegt werden.

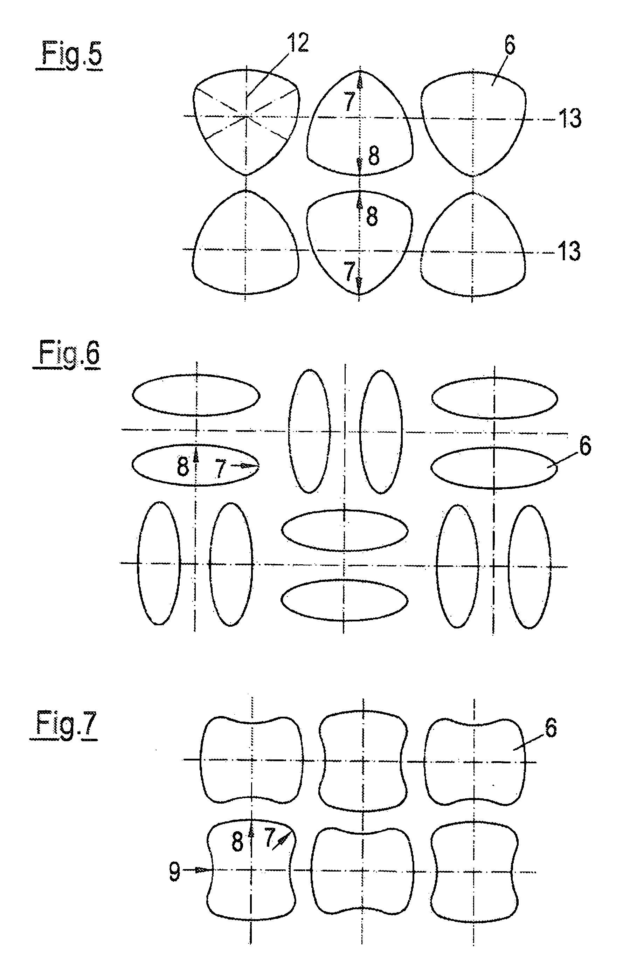

Die in Figur 5 gezeigte Sieböffnung 6 wird von jeweils drei gleich großen, langen Kreisabschnitten mit großem 8 und drei kurzen, gleich großen Kreisabschnitten mit kleinem 7 Radius gebildet, wobei einem langen Kreisabschnitt mit einem großen Radius 8 ein kurzer Kreisabschnitt mit einem kleinen Radius 7 folgt. Der von diesen Kreisabschnitten gebildete Querschnitt der Sieböffnung 6 besitzt drei Symmetrieachsen 12.

Dabei wird die Siebfläche von mehreren hier parallelen Reihen von nebeneinander angeordneten Sieböffnungen 6 gebildet, wobei benachbarte Sieböffnungen 6 um 180° versetzt zueinander angeordnet sind und jeweils eine Symmetrieachse 12 einer Sieböffnung 6 senkrecht zur Ausrichtung 13 der entsprechenden Reihe verläuft.
Zur optimalen Platzausnutzung haben jeweils zwei gegenüberliegende Sieböffnungen 6 benachbarten Reihen eine spiegelbildliche Kontur.

Im Gegensatz hierzu werden die Sieböffnungen 6 in Figur 6 von jeweils zwei langen Kreisabschnitten mit einem großen 8 und zwei kurzen mit einem kleinen 7 Radius gebildet. Auch hier wechseln sich große und kleine Radien 7,8 in Umfangsrichtung der Sieböffnung 6 ab.
Zur Beeinflussung der Siebcharakteristik sind die länglichen Sieböffnungen 6 auf der Siebfläche unterschiedlich ausgerichtet. Als Beispiel sind die Sieböffnungen 6 hier paarweise parallel nebeneinander angeordnet, wobei allerdings die Sieböffnungen 6 benachbarter Paare jeweils senkrecht zueinander ausgerichtet sind.

Die Sieböffnungen 6 gemäß Figur 7 werden von vier langen Kreisabschnitten mit großem Radius 8,9 und vier kurzen Kreisabschnitten mit kleinem Radius 7 gebildet. Zwar folgt auch hier ein großer Radius 8,9 einem kleinen 7, jedoch befindet sich der kleine Radius 7 zwischen zwei unterschiedlich gekrümmten Kreisabschnitten. Während ein großer Kreisabschnitt bezüglich der Mitte der Sieböffnung konvex gekrümmt verläuft, ist der andere konkav gekrümmt.

Wenn diese Sieböffnungen 6, wie hier, in mehreren parallelen und senkrecht zueinander verlaufenden Reihen angeordnet werden, wobei ein konvex gekrümmter 8 Kreisabschnitt einem konkav gekrümmten 9 Kreisabschnitt einer benachbarten Sieböffnung 6 gegenüberliegt, so lassen sich gleich breite Stege zwischen den Sieböffnungen 6 realisieren, was sich positiv auf die Stabilität des Siebes auswirkt. Außerdem ergibt sich dabei auch eine sehr große offene Siebfläche verbunden mit einem großen Durchsatz.

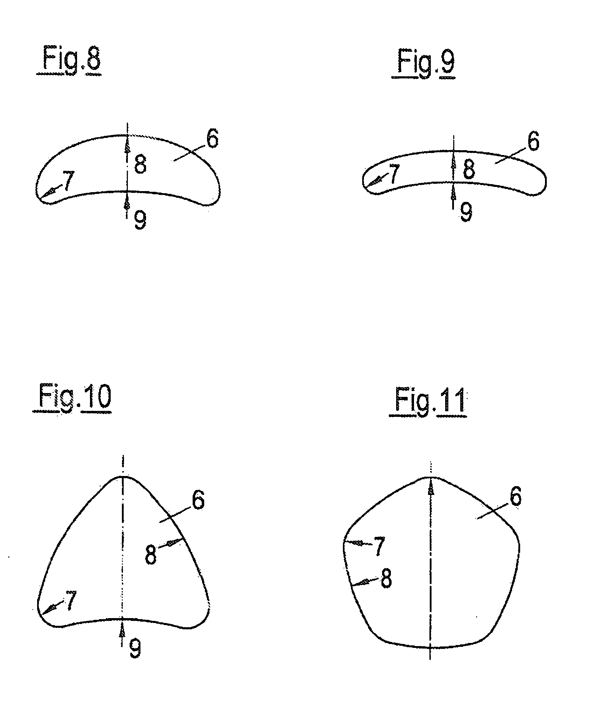

Die in den Figuren 8 und 9 dargestellten Sieböffnungen 6 werden jeweils von zwei kurzen Kreisabschnitten mit kleinem Radius 7 und zwei langen Kreisabschnitten mit großem Radius 8 gebildet. Dabei ist ein langer Kreisabschnitt bezüglich der Mitte der Sieböffnung 6 konvex und der gegenüberliegende konkav gekrümmt.

Während die langen Kreisabschnitte bei Figur 9 den gleichen Kreismittelpunkt haben, ist in Figur 8 der Radius des konvexen, langen Kreisabschnitts 8 kleiner als der Radius des konkaven Kreisabschnitts 9.

Die Sieböffnung 6 gemäß Figur 10 hat drei kurze, konvexe Kreisabschnitte mit kleinem Radius 7, zwei lange Kreisabschnitte mit großem Radius 8, die hinsichtlich der Mitte der Sieböffnung 6 konvex verlaufen sowie einen langen, konkaven Kreisabschnitt mit großem Radius 9.
Im Unterschied hierzu zeigt Figur 11 eine Sieböffnung 6, bestehend aus fünf kurzen, konvexen Kreisabschnitten mit kleinem Radius 7 und fünf langen, konvexen Kreisabschnitten mit großem Radius 8.

Wegen der in allen Beispielen gekrümmten Öffnungskanten der Sieböffnungen 6 kann die Auflösewirkung beim Zusammentreffen mit den an ihnen dicht vorbei bewegten Rotorflügeln 4 erheblich verbessert werden.
Hinzu kommt, dass der Durchlass von großen, starren Teilen behindert werden kann.

Der Auflöseeffekt kann außerdem durch eine entsprechende Ausrichtung der Sieböffnungen 6 verbessert werden.

## Patentansprüche

1. Stofflöser zur Zerkleinerung und Suspendierung von Faserstoff (F) bestehend aus einem Behälter (2) und mindestens einem im Behälter (2) angeordneten Rotor (4) zum Umwälzen einer im Behälter (2) befindlichen Faserstoffsuspension (1) sowie mindestens einem starren Sieb (3), dessen mit runden Sieböffnungen (6) versehene Siebfläche vom Rotor (4) zumindest größtenteils überstrichen wird, **dadurch gekennzeichnet, dass** der Querschnitt der Sieböffnungen (6) ausschließlich von Kreisabschnitten begrenzt wird und das Verhältnis zwischen dem größten (8,9) und dem kleinsten (7) Radius der Kreisabschnitte zwischen 3 und 20 liegt.

2. Stofflöser nach Anspruch 1, **dadurch gekennzeichnet, dass** die Kreisabschnitte unterschiedlich lang sind.

3. Stofflöser nach Anspruch 2, **dadurch gekennzeichnet, dass** sich kurze und lange Kreisabschnitte abwechseln.

4. Stofflöser nach einem der vorhergehenden Ansprüche, **dadurch gekennzeichnet, dass** die Kreisabschnitte unterschiedliche Radien (7, 8, 9) haben.

5. Stofflöser nach Anspruch 4, **dadurch gekennzeichnet, dass** sich große (8, 9) und kleine (7) Radien abwechseln.

6. Stofflöser nach einem der Ansprüche 2 bis 5, **dadurch gekennzeichnet, dass** lange Kreisabschnitte große Radien (8, 9) und kurze Kreisabschnitte kleine Radien (7) haben.

7. Stofflöser nach einem der vorhergehenden Ansprüche, **dadurch gekennzeichnet, dass** das Verhältnis zwischen dem größten (8,9) und dem kleinsten (7) Radius der Kreisabschnitte zwischen 5 und 15 liegt.

8. Stofflöser nach einem der vorhergehenden Ansprüche, **dadurch gekennzeichnet, dass** der kleinste Radius (7) der Kreisabschnitte zwischen 1,5 und 3 mm liegt.

9. Stofflöser nach einem der vorhergehenden Ansprüche, **dadurch gekennzeichnet, dass** der größte Radius (8,9) der Kreisabschnitte zwischen 10 und 30 mm liegt.

10. Stofflöser nach einem der vorhergehenden Ansprüche, **dadurch gekennzeichnet, dass** der Querschnitt der Sieböffnungen (6) von 4 Kreisabschnitten begrenzt wird.

11. Stofflöser nach einem der Ansprüche 1 bis 9, **dadurch gekennzeichnet, dass** der Querschnitt der Sieböffnungen (6) von 6 Kreisabschnitten begrenzt wird.

12. Stofflöser nach einem der Ansprüche 1 bis 9, **dadurch gekennzeichnet, dass** der Querschnitt der Sieböffnungen (6) von 8 Kreisabschnitten begrenzt wird.

13. Stofflöser nach einem der Ansprüche 1 bis 9, **dadurch gekennzeichnet, dass** der Querschnitt der Sieböffnungen (6) von 10 Kreisabschnitten begrenzt wird.

14. Stofflöser nach einem der vorhergehenden Ansprüche, **dadurch gekennzeichnet, dass** alle Sieböffnungen (6) der Siebfläche gleich ausgebildet sind.

15. Stofflöser nach einem der Ansprüche 1 bis 13, **dadurch gekennzeichnet, dass** die Sieböffnungen (6) der Siebfläche unterschiedliche Querschnittsformen aufweisen.

16. Stofflöser nach einem der Ansprüche 1 bis 13, **dadurch gekennzeichnet, dass** die Sieböffnungen (6) der Siebfläche die gleiche Querschnittsform besitzen aber unterschiedlich groß ausgebildet sind.

17. Stofflöser nach einem der vorhergehenden Ansprüche, **dadurch gekennzeichnet, dass** mehrere, vorzugsweise alle Kreisabschnitte einer Sieböffnung (6) bezogen auf die Mitte des Querschnitts der Sieböffnung (6) konvex gekrümmt verlaufen.

18. Stofflöser nach einem der vorhergehenden Ansprüche, **dadurch gekennzeichnet, dass** wenigstens ein vorzugsweise langer Kreisabschnitt einer Sieböffnung (6) bezogen auf die Mitte des Querschnitts der Sieböffnung (6) konkav gekrümmt verläuft.

19. Stofflöser nach Anspruch 18, **dadurch gekennzeichnet, dass** zwei sich vorzugsweise gegenüberliegende Kreisabschnitte einer Sieböffnung (6) bezogen auf die Mitte des Querschnitts der Sieböffnung (6) konkav gekrümmt verlaufen.

20. Stofflöser nach Anspruch 18, **dadurch gekennzeichnet, dass** nur ein vorzugsweise langer Kreisabschnitt konkav verläuft.

21. Stofflöser nach einem der vorhergehenden Ansprüche, **dadurch gekennzeichnet, dass** die Sieböffnungen (6) einen länglichen Querschnitt aufweisen.

22. Stofflöser nach einem der vorhergehenden Ansprüche, **dadurch gekennzeichnet, dass** die Sieböffnungen (6) einer Siebfläche gleich ausgerichtet sind.

23. Sofflöser nach einem der Ansprüche 1 bis 21, **dadurch gekennzeichnet, dass** die Sieböffnungen (6) einer Siebfläche unterschiedlich ausgerichtet sind.

24. Stofflöser nach Anspruch 23, **dadurch gekennzeichnet, dass** benachbarte Sieböffnungen (6) um 90° oder 180° versetzt zueinander angeordnet sind.

25. Stofflöser nach einem der vorhergehenden Ansprüche, **dadurch gekennzeichnet, dass** sich der Querschnitt einer Sieböffnung (6) in Durchströmungsrichtung (5) der Faserstoffsuspension (1) vorzugsweise stetig vergrößert.

## Claims

1. Pulper for comminuting and suspending fibrous material (F), comprising a container (2) and at least one rotor (4) arranged in the container (2) for circulating a fibrous suspension (1) located in the container (2), and at least one rigid screen (3), the screen area of which, provided with round screen openings (6), is swept over by the rotor (4), at least for the most part, **characterized in that** the cross section of the screen openings (6) is delimited exclusively by circular sections and the ratio between the largest (8, 9) and the smallest (7) radius of the circular sections lies between 3 and 20.

2. Pulper according to Claim 1, **characterized in that** the circular sections have different lengths.

3. Pulper according to Claim 2, **characterized in that** short and long circular sections alternate.

4. Pulper according to one of the preceding claims, **characterized in that** the circular sections have different radii (7, 8, 9).

5. Pulper according to Claim 4, **characterized in that** large (8, 9) and small (7) radii alternate.

6. Pulper according to one of Claims 2 to 5, **characterized in that** long circular sections have large radii (8, 9) and short circular sections have small radii (7).

7. Pulper according to one of the preceding claims, **characterized in that** the ratio between the largest (8, 9) and smallest (7) radius of the circular sections lies between 5 and 15.

8. Pulper according to one of the preceding claims, **characterized in that** the smallest radius (7) of the circular sections lies between 1.5 and 3 mm.

9. Pulper according to one of the preceding claims, **characterized in that** the largest radius (8, 9) of the circular sections lies between 10 and 30 mm.

10. Pulper according to one of the preceding claims, **characterized in that** the cross section of the screen openings (6) is delimited by four circular sections.

11. Pulper according to one of Claims 1 to 9, **characterized in that** the cross section of the screen openings (6) is delimited by six circular sections.

12. Pulper according to one of Claims 1 to 9, **characterized in that** the cross section of the screen openings (6) is delimited by eight circular sections.

13. Pulper according to one of Claims 1 to 9, **characterized in that** the cross section of the screen openings (6) is delimited by ten circular sections.

14. Pulper according to one of the preceding claims, **characterized in that** all the screen openings (6) of the screen area are formed identically.

15. Pulper according to one of Claims 1 to 13, **characterized in that** the screen openings (6) of the screen area have different cross-sectional shapes.

16. Pulper according to one of Claims 1 to 13, **characterized in that** the screen openings (6) of the screen area have the same cross-sectional shape but are formed with different sizes.

17. Pulper according to one of the preceding claims, **characterized in that** a plurality, preferably all, of the circular sections of a screen opening (6) extend in a convex curve in relation to the centre of the cross section of the screen opening (6).

18. Pulper according to one of the preceding claims, **characterized in that** at least one preferably long circular section of a screen opening (6) extends in a concave curve in relation to the centre of the cross section of the screen opening (6).

19. Pulper according to Claim 18, **characterized in that** two preferably opposite circular sections of a screen opening (6) extend in a concave curve in relation to the centre of the cross section of the screen opening (6).

20. Pulper according to Claim 18, **characterized in that** only one preferably long circular section extends concavely.

21. Pulper according to one of the preceding claims, **characterized in that** the screen openings (6) have an elongated cross section.

22. Pulper according to one of the preceding claims, **characterized in that** the screen openings (6) of a screen area are oriented identically.

23. Pulper according to one of Claims 1 to 21, **characterized in that** the screen openings (6) of a screen area are oriented differently.

24. Pulper according to Claim 23, **characterized in that** adjacent screen openings (6) are arranged to be offset by 90° or 180° relative to one another.

25. Pulper according to one of the preceding claims, **characterized in that** the cross section of a screen opening (6) preferably expands continuously in the flow direction (5) of the fibrous suspension (1).

## Revendications

1. Pulpeur pour broyer et mettre en suspension une matière fibreuse (F), constitué d'un récipient (2) et d'au moins un rotor (4) disposé dans le récipient (2) en vue de mettre en circulation une suspension de matière fibreuse (1) se trouvant dans le récipient (2) ainsi que d'au moins une toile rigide (3) dont la surface de toile pourvue d'ouvertures de toile rondes (6) est au moins pour la majeure partie balayée par le rotor (4), **caractérisé en ce que** la section transversale des ouvertures de toile (6) est exclusivement limitée par des sections de cercle et le rapport entre le plus grand rayon (8, 9) et le plus petit rayon (7) des sections de cercle est compris entre 3 et 20.

2. Pulpeur selon la revendication 1, **caractérisé en ce que** les sections de cercle ont des longueurs différentes.

3. Pulpeur selon la revendication 2, **caractérisée en ce que** des portions de cercle courtes et longues sont disposées en alternance.

4. Pulpeur selon l'une quelconque des revendications précédentes, **caractérisé en ce que** les sections de cercle présentent des rayons différents (7, 8, 9).

5. Pulpeur selon la revendication 4, **caractérisé en ce que** des grands rayons (8, 9) et des petits rayons (7) sont disposés en alternance.

6. Pulpeur selon l'une quelconque des revendications 2 à 5, **caractérisé en ce que** des sections de cercle longues ont des grands rayons (8, 9) et des sections de cercle courtes ont des petits rayons (7).

7. Pulpeur selon l'une quelconque des revendications précédentes, **caractérisé en ce que** le rapport entre le plus grand rayon (8, 9) et le plus petit rayon (7) des sections de cercle est compris entre 5 et 15.

8. Pulpeur selon l'une quelconque des revendications précédentes, **caractérisé en ce que** le plus petit rayon (7) des sections de cercle est compris entre 1,5 et 3 mm.

9. Pulpeur selon l'une quelconque des revendications précédentes, **caractérisé en ce que** le plus grand rayon (8, 9) des sections de cercle est compris entre 10 et 30 millimètres.

10. Pulpeur selon l'une quelconque des revendications précédentes, **caractérisé en ce que** la section transversale des ouvertures de toile (6) est limitée par 4 sections de cercle.

11. Pulpeur selon l'une quelconque des revendications 1 à 9, **caractérisé en ce que** la section transversale des ouvertures de toile (6) est limitée par 6 sections de cercle.

12. Pulpeur selon l'une quelconque des revendications 1 à 9, **caractérisé en ce que** la section transversale des ouvertures de toile (6) est limitée par 8 sections de cercle.

13. Pulpeur selon l'une quelconque des revendications 1 à 9, **caractérisé en ce que** la section transversale des ouvertures de toile (6) est limitée par 10 sections de cercle.

14. Pulpeur selon l'une quelconque des revendications précédentes, **caractérisé en ce que** toutes les ouvertures de toile (6) de la surface de toile sont réalisées de manière identique.

15. Pulpeur selon l'une quelconque des revendications 1 à 13, **caractérisé en ce que** les ouvertures de toile (6) de la surface de toile présentent des formes différentes en section transversale.

16. Pulpeur selon l'une quelconque des revendications 1 à 13, **caractérisé en ce que** les ouvertures de toile (6) de la surface de toile présentent la même forme en section transversale mais sont réalisées avec des tailles différentes.

17. Pulpeur selon l'une quelconque des revendications précédentes, **caractérisé en ce que** plusieurs, de préférence la totalité des sections de cercle d'une ouverture de toile (6) s'étendent avec une courbure convexe par rapport au centre de la section transversale de l'ouverture de toile (6).

18. Pulpeur selon l'une quelconque des revendications précédentes, **caractérisé en ce qu'**au moins une section de cercle de préférence plus longue d'une ouverture de toile (6) s'étend avec une courbure concave par rapport au centre de la section transversale de l'ouverture de toile (6).

19. Pulpeur selon la revendication 18, **caractérisé en ce que** deux sections de cercle de préférence opposées d'une ouverture de toile (6) s'étendent avec une courbure concave par rapport au centre de la section transversale de l'ouverture de toile (6).

20. Pulpeur selon la revendication 18, **caractérisé en ce que** seulement une section de cercle de préférence plus longue s'étend sous forme concave.

21. Pulpeur selon l'une quelconque des revendications précédentes, **caractérisé en ce que** les ouvertures de toile (6) présentent une section transversale allongée.

22. Pulpeur selon l'une quelconque des revendications précédentes, **caractérisé en ce que** les ouvertures de toile (6) d'une surface de toile sont orientées de manière identique.

23. Pulpeur selon l'une quelconque des revendications 1 à 21, **caractérisé en ce que** les ouvertures de toile (6) d'une surface de toile sont orientées de manière différente.

24. Pulpeur selon la revendication 23, **caractérisé en ce que** des ouvertures de toile adjacentes (6) sont disposées de manière décalée de 90° ou de 180° les unes par rapport aux autres.

25. Pulpeur selon l'une quelconque des revendications précédentes, **caractérisé en ce que** la section transversale d'une ouverture de toile (6) augmente de préférence de manière constante dans la direction d'écoulement (5) de la suspension de matière fibreuse (1).
